# EUROPEAN PATENT SPECIFICATION

(11) **EP 2 643 367 B1**
(45) Date of publication and mention of the grant of the patent: **11.02.2015**
(21) Application number: 11781822.9
(22) Date of filing: 15.11.2011
(51) Int. Cl.: C08F 212/08, C08F 236/06, C08F 236/10, B60C 1/00, C08L 9/06, C08F 4/64, C08L 25/10

(54) **HIGH-PERFORMANCE TYRE**
HOCHLEISTUNGSREIFEN
PNEU HAUTE PERFORMANCE

(30) Priority: 26.11.2010 IT MI20102199; 05.01.2011 US 201161429909 P
(43) Date of publication of application: 02.10.2013
(73) Proprietor: Pirelli Tyre S.p.A., 20126 Milano (IT)
(72) Inventor: CAPRIO, Michela, I-20126 Milano (IT); PROTO, Antonio, I-84084 Fisciano (IT); CAPACCHIONE, Carmine, I-84084 Fisciano (IT); NAHMIAS NANNI, Marco, I-20126 Milano (IT); MOTTA, Oriana, I-84084 Fisciano (IT)
(74) Representative: Allaix, Roberto
(86) International application number: PCT/EP2011/070107
(87) International publication number: WO 2012/069335

(56) References cited:
- EP-A1- 0 877 034
- EP-A1- 1 426 408
- WO-A1-2010/006655
- STEFANO MILIONE, CINZIA CUAMO, CARMINE CAPACCHIONE, CARLA ZANNONI, ALFONSO GRASSI AND ANONIO PROTO: "Stereoselective Polymerization of Conjugated Dienes and Styrene - Butadiene Copolymerization Promoted by Octahedra Titanium Catalyst", MACROMOLECULES, vol. 40, no. 16, 7 December 2007 (2007-12-07), pages 5638-5643, XP002636684,
- ANTONIO PROTO, ANTONIETTA AVAGLIANO, DANIELA SAVIELLO AND CARMINE CAPACCHIONE: "Copolymerization of Ethylene with 4-Methyl-1,3-pentadiene Promoted by Titanium Complexes Containing a Tetradentate (OSSO)-Type Bis(phenolato) Ligand", MACROMOLECULES, vol. 42, no. 18, 27 August 2009 (2009-08-27), pages 6981-6985, XP002636685, DOI: 10.1021/ma901293k cited in the application

## Description

### FIELD OF THE INVENTION

The present invention relates to a high-performance tyre for vehicle wheels, in particular cars. In particular, the present invention relates to a high-performance tyre tread that comprises a crosslinked elastomeric material obtained by crosslinking a crosslinkable elastomeric composition comprising a polymer with a high styrene content.

### PRIOR ART

Some catalysts and processes for production of polymers and copolymers are described in documents US 3,903,019, US 4,112,210, US 4,129,705, US 4,933,401, US 5,100,965, US 5,753,579, US 6,103,842 and US 6,627,715.

The use of polymers and copolymers for the production of at least one component of tyres is described in documents US 4,669,518, US 5,317,062, US 6,429,245, US 6, 581, 659, US 6,872,772, US 6,889,737, US 7,048,023, US 2004/0039104, US 2004/0177907, EP 1 593 528 and WO 2010/006655.

### SUMMARY OF THE INVENTION

One of the aims of research in the field of tyres is to increase driving safety together with an increase in overall performance.

In particular, high-performance tyres are designed to be used at high speeds and so must guarantee good grip, especially on curves at high speed.

Said tyres, which are commonly called "HP" and "UHP" (high-performance and ultra-high-performance), are in particular, but not exclusively, those that belong to classes "T", "U", "H", "V", "Z", "W", "Y" which give maximum speeds above 190 km/h and up to above 300 km/h, for which operational performance at high temperatures is undoubtedly one of the most important factors.

Traditionally, the elastomeric compositions used for the production of high-performance tyre treads are based on styrene-butadiene (SBR) copolymers and are characterized by high values of glass transition temperature (Tg) (that is, above -50°C).

According to the applicant's experience, it is in fact considered that a high Tg value guarantees good grip of the tyre tread but, simultaneously, imparts reduced abrasion resistance and high rolling resistance. Conversely, a low Tg value guarantees high abrasion resistance and low rolling resistance, but grip is reduced.

Since it is not possible to obtain all of the characteristics described above using just one elastomeric compound, for the purpose of obtaining tyre treads with characteristics that are optimum in all respects, elastomeric compositions that use mixtures of elastomeric polymers and/or copolymers with different physicochemical characteristics have been prepared in the prior art.

However, even when elastomeric compositions are obtained with a Tg value between -90°C and -40°C, it is not always possible to guarantee a good compromise between the characteristics of grip and durability.

Moreover, high-performance tyres are subject, during use, to a notable temperature increase, which can cause phenomena of compliance in the tread and can have an adverse influence on grip. Consequently, it is necessary to guarantee constancy of the mechanical properties and performance even when the temperature of the tyre increases.

In the applicant's experience, it is in fact considered that the characteristics of grip of a high-performance tyre tread, in particular in extreme driving conditions, at high speed and on curves, are influenced positively by the presence of high percentages of styrene in the elastomeric polymers and/or copolymers used for preparing elastomeric compositions. In fact, the use of polymers and/or copolymers with high styrene content makes it possible to increase the hysteresis values of the finished tyre tread.

However, the commercially available styrene-butadiene copolymers used in the prior art for forming the elastomeric compositions contain a maximum percentage of styrene equal to approx. 40 wt.%.

The traditional techniques of polymerization and catalysis do not allow styrene-butadiene copolymers to be obtained with higher percentages of styrene monomers, since the presence of high percentages of styrene during the polymerization process promotes the formation of block copolymers, i.e. copolymers in which 10 or more consecutive styrene units are present, which can display the Tg typical of polystyrene (+100°C), are thermoplastic and therefore are not suitable for the production of tyre treads, as their mechanical properties and abrasion resistance would be drastically compromised.

In the applicant's experience, to modify the Tg of the mixture, it is possible to add low-molecular-weight resins and/or polymers with high styrene content.

The elastomeric compositions used for the production of tyre treads then comprise styrene resins (for example, resins of α-methyl-styrene, styrene-indene, and the like), characterized by a low molecular weight (MW), typically below 2,000, and by a high styrene content, for example equal to at least 25 wt.%, and preferably even up to 100 wt.%. On account of their high styrene content, they are used for modulating the hysteresis of tyre treads and, since they are dissolved completely in the elastomeric compositions, they also modulate their glass transition temperature (Tg).

However, the resins have the disadvantage that they do not crosslink with the elastomeric polymers and/or copolymers that form the basic elastomeric composition. Therefore tearing of the tyre tread can occur, especially in arduous operating conditions, even after a relatively short period of service.

As an alternative to or in combination with resins, polymer materials of low molecular weight (MW), i.e. typically below 10,000, can be added to the elastomeric compositions.

The polymers with low MW have the advantage of crosslinking with the polymers and/or copolymers that form the basic elastomeric composition, but they do not greatly increase the hysteresis of the finished tyre tread since they do not have a styrene content as high as that of the resins.

In this case, the finished tyre tread will have better resistance to tearing but reduced grip, compared with tyre treads in which resins are added.

In an attempt to improve the properties of grip and durability of the finished tyre tread simultaneously, resins and polymers with low MW are often used together. However, the combination of these materials does not completely solve the problem of tearing of the tyre tread.

The applicant therefore considers that there is still a great need for compounds for high-performance tyre treads that can reconcile the characteristics described above, in particular good grip and high resistance to tearing.

The applicant found, surprisingly, that a stereoregular styrene-butadiene copolymer (in particular, with butadiene in the *trans* conformation and styrene in the isotactic configuration), having low molecular weight, in particular below 500,000, random distribution and styrene content higher than 40 wt.%, can be used advantageously in the elastomeric composition used in the production of a tyre tread to overcome the aforementioned disadvantages.

In the context of the present description, a stereoregular styrene-butadiene copolymer with butadiene in the *trans* conformation and styrene in the isotactic configuration with random distribution is indicated by the term random iso-styrene/trans-butadiene copolymer.

*Trans* conformation of butadiene means the geometric arrangement of the butadiene monomers in which two single bonds of chain propagation are arranged on opposite sides relative to the central double bond, as represented in the following structural formula.

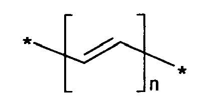

Isotactic configuration of styrene means isotactic arrangement of the styrene monomers, or the arrangement in which the carbon atoms bearing the styrene groups have the same relative configuration and the styrene groups have the same spatial arrangement relative to the plane, as represented in the following structural formula.

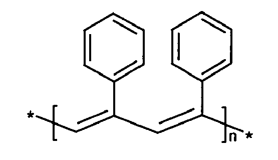

Random arrangement of the copolymer means random arrangement of the butadiene and styrene monomers in the polymer chain, as represented, by way of illustration, in the following graphical representation, in which B indicates the butadiene monomers and S indicates the styrene monomers.

S-B-S-S-B-S-B-S-B-B-S-B-...

The applicant in fact found, surprisingly, that the use of a copolymer with the aforementioned characteristics in the elastomeric composition used in the production of a tyre tread can overcome the disadvantages that have been described. In particular, the use of a copolymer with the aforementioned characteristics in the elastomeric composition used in the production of a tyre tread guarantees a high supply of styrene, crosslinking with the basic elastomeric composition and dissolving therein.

Advantageously, the use of a random iso-styrene/trans-butadiene copolymer with low MW and styrene content higher than 40 wt.% in the elastomeric composition used in the production of a tyre tread makes it possible to obtain a tyre tread characterized by reduced values of thermoplasticity (decrease in delta value 10-100) while maintaining high values of elongation load (high values of Ca3), relative to compounds in which the traditional resins and oils are used, and high modulus (E') at high temperatures. Therefore a general decrease in sensitivity of the tyre tread to the effects of temperature, especially heating, is obtained. Moreover, the tyre tread shows lower compliance, greater constancy of performance and improvement of resistance to tearing, even when submitted to harsh service, for example at high speeds and on curves.

Moreover, the applicant found, surprisingly, that the use of a styrene-butadiene copolymer with the aforementioned characteristics endows the tyre tread with different properties based on the percentage of styrene present in said polymer, so that it becomes possible to make tyre treads for various specific applications.

The present invention therefore relates to a tyre for vehicle wheels comprising:
- a carcass structure, having opposite lateral edges associated with respective bead structures;
- a belt structure applied in a radially outer position with respect to said carcass structure;
- a tread band applied in a radially outer position with respect to said belt structure;
characterized in that said tread band comprises a crosslinked elastomeric material obtained by crosslinking a crosslinkable elastomeric composition, wherein said elastomeric composition comprises at least a random iso-styrene/trans-butadiene copolymer having a styrene content higher than 40% by weight with respect to the total weight of the copolymer.

Preferably, the styrene-butadiene copolymer has a styrene content between 40% and 90% by weight with respect to the total weight of the copolymer.

Advantageously, the use of a random iso-styrene/trans-butadiene copolymer with low MW and styrene content between 40% and 70% by weight makes it possible to obtain a tyre tread having an improved resistance to tearing.

Advantageously, the use of a random iso-styrene/trans-butadiene copolymer with low MW and styrene content between 70% and 90% by weight makes it possible to obtain a tyre tread having improved grip.

Preferably, the styrene-butadiene copolymer has a content of 1,4-butadiene (i.e. of butadiene polymerized in positions 1-4) between 10% and 60% by weight with respect to the total weight of the copolymer.

Preferably, the styrene-butadiene copolymer has a content of 1,2-butadiene (i.e. of butadiene polymerized in positions 1-2) lower than 2% by weight with respect to the total weight of the copolymer, more preferably said polymer is free from 1,2-butadiene.

Preferably, the styrene-butadiene copolymer has a Tg value (measured at onset - onset Tg) between -45 and +20°C.

Preferably, the styrene-butadiene copolymer has a molecular weight lower than 500,000, more preferably lower than 200,000 and even more preferably between 10,000 and 150,000.

Preferably, the styrene-butadiene copolymer has an index of dispersion ID of the molecular weight between 1 and 5, more preferably between 1.5 and 3.5. The index of dispersion is calculated from the relation ID = Mw/Mn where Mw represents the weight-average molecular weight and Mn represents the number-average molecular weight.

Advantageously, the styrene-butadiene copolymer co-crosslinks with the crosslinkable elastomeric composition during the vulcanization process.

Preferably, the styrene-butadiene copolymer is present in the elastomeric composition in an amount between 1 and 30 phr, preferably between 5 and 20 phr, and more preferably between 7 and 15 phr.

Advantageously, the styrene-butadiene copolymer for use in the present invention can be obtained by solution copolymerization of styrene and butadiene using a homogeneous catalyst having general formula (I) 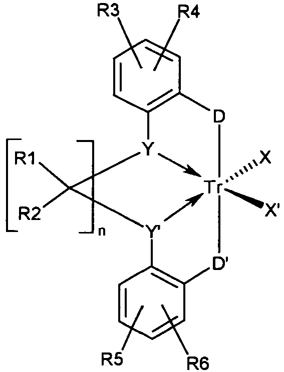
wherein Tr is a transition metal,
X and X', which are equal or different, are a halogen atom,
R1 and R2, which are the same or different, are a H atom or a linear or branched alkyl group having from 1 to 10 carbon atoms,
from R3 to R6, which are the same or different, are a H atom or a linear or branched alkyl group having from 1 to 10 carbon atoms,
Y and Y', which are the same or different, are an oxygen, sulphur, selenium or tellurium atom, or an NR7 or PR7 group,
D and D', which are the same or different, are an oxygen, sulphur, selenium or tellurium atom, or an NR7 or PR7 group,
R7 is a H atom or a linear or branched alkyl group having from 1 to 10 carbon atoms,
n is an integer from 1 to 10.

This catalyst, as described in patent application WO 2010/006655, has a high catalytic activity and supplies a high polymer yield, even higher than that of the known catalyst systems used traditionally for this type of reaction (see, for example, those described by P. Longo, F. Grisi, A. Proto, "Chemoselectivity in 4-methyl-1,3-pentadiene polymerization in the presence of homogeneous Ti-based catalysts" Macromol. Rapid Commun. 18, 183-190 (1997)).

The aforementioned catalyst can be used in a process at room temperature and at normal atmospheric pressure, with notable advantages with respect to costs and safety of the industrial process.

The copolymerization process takes place in a suitable solvent, preferably an aprotic solvent. Aprotic solvents that can be used are for example aliphatic hydrocarbons, such as pentane, hexane and cyclohexane, aromatic hydrocarbons, such as benzene, toluene, xylene and ethylbenzene, and halogenated hydrocarbons, such as dichloromethane. The preferred solvents are aromatic hydrocarbons, in particular toluene. Naturally, mixtures of the aforementioned solvents can also be used.

The initial concentration of each comonomer added is generally set at a value between 0.001 and 10 mol/I, preferably between 0.01 and 8 mol/l. The reaction temperature can vary over quite a wide range depending on the solvent used. The reaction temperature is usually between 0° and 100°C, and in particular preferably between 10° and 40°C. Preferably, the copolymerization process is carried out at room temperature. The reaction is continued for a period of time between 15 minutes and 75 hours, preferably between 30 minutes and 30 hours. The reaction can be carried out at pressures between 0.1 and 10 atmospheres. The reaction is usually carried out at pressures between 0.5 and 5 atmospheres. Preferably, the copolymerization process is carried out at atmospheric pressure.

The copolymerization process is preferably carried out in controlled reaction conditions, i.e. with exclusion of oxygen and moisture. If desired, an inert gas such as argon or nitrogen can be used. The polymerization reaction begins with addition of the catalyst to the solution of comonomers. The catalyst can be added as it is or in solution. The copolymerization process preferably comprises the use of an activator, for example alumoxanes and aluminium-alkyls, as known in the prior art. The copolymerization process is stopped by adding a protic compound, for example a low-molecular-weight alcohol, such as methanol, ethanol, and isopropanol, or by removal of the solvent. The copolymer formed is generally solid and can be recovered from organic solvents by conventional techniques, such as decanting, filtration, centrifugation, and so on. The copolymer can then be purified by conventional techniques, such as washing or steam extraction, to remove impurities, typically represented by volatile organic compounds.

In a preferred embodiment, the crosslinkable elastomeric composition comprises at least one elastomeric polymer of high molecular weight, preferably a diene elastomeric polymer, of natural or synthetic origin.

Preferably said elastomeric polymer is present in an amount of 100 phr. For the purpose of the present description and of the claims that follow, the term "phr" indicates the parts by weight of a certain component of the crosslinkable elastomeric composition per 100 parts by weight of the elastomeric polymer.

Preferably, said diene elastomeric polymer is selected from the group comprising: cis-1,4-polyisoprene (natural or synthetic, preferably natural rubber), 3,4-polyisoprene, polybutadiene (in particular, polybutadiene with a high 1,4-cis content), isoprene/isobutene copolymers optionally halogenated, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

The diene elastomeric polymers described above can optionally be functionalized with suitable terminating or coupling agents.

Advantageously, the crosslinkable elastomeric composition typically also comprises at least one reinforcing filler that can be selected from those commonly used for crosslinked manufactured products, in particular for tyres, for example: carbon black, silica and silicates, alumina, calcium carbonate, or mixtures thereof. Carbon black, silica and mixtures thereof are particularly preferred.

Preferably, said reinforcing filler can be present in the crosslinkable elastomeric composition in an amount generally less than 130 phr, preferably from 40 phr to 100 phr.

According to a preferred embodiment, said reinforcing filler of carbon black can be selected from those having a surface area not less than 20 m²/g (determined from the STSA - statistical thickness surface area - according to ISO 18852:2005).

According to a preferred embodiment, said reinforcing filler of silica can be for example precipitated silica.

The reinforcing fillers of silica that can be used advantageously according to the present invention preferably have a BET surface area from about 30 m²/g to 400 m²/g, more preferably from about 100 m²/g to about 250 m²/g, even more preferably from about 120 m²/g to about 220 m²/g. The pH of said reinforcing filler of silica is generally from about 5.5 to about 7, preferably from about 5.5 to about 6.8.

Examples of reinforcing fillers of silica that can be used according to the present invention and are commercially available are the products known by the names Hi-Sil® 190, Hi-Sil® 210, Hi-Sil® 233, Hi-Sil® 243, available from PPG Industries (Pittsburgh, Pa.); or the products known by the names Ultrasil® VN2, Ultrasil® VN3 from Evonik; or the products known by the name Zeosil® 1165MP from Rhodia.

Advantageously, the elastomeric composition comprises at least one silane coupling agent that is able to interact with the reinforcing filler and bind it to the elastomeric polymer during vulcanization.

The coupling agents that are preferably used are those based on silane that can be identified, for example, by the following structural formula (VI):

(R₂)₃Si-CₜH₂ₜ-X (VI)

in which the groups R₂, which may be identical or different, are selected from: alkyl, alkoxy or aryloxy groups or from halogen atoms, provided that at least one of the groups R₂ is an alkoxy or aryloxy group; t is an integer between 1 and 6 inclusive; X is a group selected from nitroso, mercapto, amino, epoxide, vinyl, imide, chloro, -(S)ᵤCₜH₂ₜ-Si-(R₂)₃ or -S-COR₂, in which u and t are integers from 1 to 6 inclusive, and the groups R₂ are defined as given above.

Coupling agents that are particularly preferred are: bis(3-triethoxysilylpropyl) tetrasulphide and bis(3-triethoxysilylpropyl) disulphide. Said coupling agents can be used as they are or in a suitable mixture with an inert filler (for example carbon black) in order to facilitate their incorporation in the crosslinkable elastomeric composition.

Preferably, the coupling agent is added to the crosslinkable elastomeric composition in an amount from 1 to 20 % by weight, more preferably from 5 to 15 % by weight, and even more preferably from 8 to 12 % by weight relative to the weight of silica.

The crosslinkable elastomeric composition mentioned above can be vulcanized according to the known techniques, in particular with sulphur-based vulcanizing systems, commonly used for elastomeric polymers. For this purpose, a sulphur-based curing agent is incorporated together with vulcanization accelerants in the composition, after one or more phases of thermomechanical processing. In the final processing phase, the temperature is generally kept below 120°C and preferably below 100°C, so as to avoid any undesirable phenomenon of pre-crosslinking.

The curing agent used most advantageously is sulphur or molecules containing sulphur (sulphur donors), with curing activators, accelerants and retardants, which are known by a person skilled in the art.

Activators that are particularly effective are zinc compounds, and in particular ZnO, zinc salts of saturated or unsaturated fatty acids, for example zinc stearate, which are preferably formed in situ in the elastomeric composition starting from ZnO and fatty acids. Other possible activators that can be used are oxides or inorganic salts of Fe, Cu, Sn, Mo and Ni as described in patent application EP 1231079. Stearic acid is typically used as activator with zinc oxide.

Said curing activators are preferably used in the crosslinkable elastomeric composition in an amount from about 0.5 phr to about 10 phr, more preferably from 1 phr to 5 phr. Accelerants that are commonly used can be selected from: dithiocarbamates, guanidine, thiourea, thiazoles, sulphenamides, thiurams, amines, xanthates, or mixtures thereof.

The curing retardants that are commonly used can be selected, for example, from: urea, N-cyclohexyl-2-benzothiazolyl sulphenamide, N-cyclohexyl-phthalimide, N-cyclohexylthiophthalimide, N-nitrosodiphenylamine or mixtures thereof.

Said curing retardants are optionally used in the crosslinkable elastomeric composition in an amount less than 1 phr, more preferably less than 0.5 phr and, even more preferably, from about 0.1 phr to about 0.3 phr.

The crosslinkable elastomeric composition can comprise other additives commonly used based on the specific application for which the composition will be used. For example, the following can be added to the elastomeric composition: antioxidants, anti-ageing agents, plasticizers, adhesives, antiozonants (in particular of the p-phenylenediamine type), waxes, modified resins, fibres (for example Kevlar® paste), or mixtures thereof.

The crosslinkable elastomeric composition mentioned above can be prepared by mixing together the basic elastomeric components together with the other additives optionally present, according to the techniques known by a person skilled in the art. The mixing phases can be carried out, for example, using an open mixer of the open kneader type or an internal mixer of the type with tangential rotors (Banbury) or with copenetrating rotors (Intermix), or in continuous mixers of the Ko-Kneader type (Buss), or of the co-rotating or counter-rotating twin-screw type.

### DRAWINGS

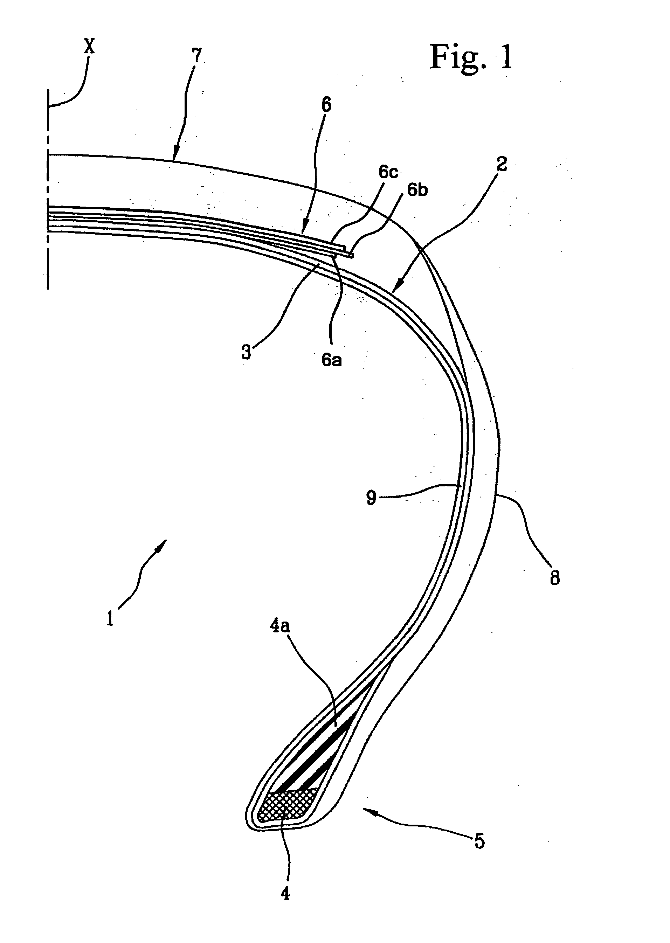

Fig. 1 shows a cross-sectional view of a portion of a tyre.

### DETAILED DESCRIPTION OF THE INVENTION

The present invention will be illustrated in more detail by means of an illustrative embodiment, referring to the appended Fig. 1.

"a" indicates an axial direction and "r" indicates a radial direction. For simplicity, Fig. 1 shows only a portion of the tyre, the remainder that is not shown being identical and arranged symmetrically with respect to the radial direction "r".

The reference number 1 in Fig. 1 indicates a tyre for vehicle wheels, which generally comprises a carcass structure 2 comprising at least one carcass ply 3 having terminal edges respectively opposite engaging with respective annular anchoring structures 4, optionally associated with elastomeric fillers 4a, integrated in zones 5 usually identified with the name "beads".

The carcass structure 2 is associated with a belt structure 6 comprising one or more belt layers 6a, 6b radially superimposed on one another and with respect to the carcass ply 3, having reinforcing cords, typically metallic. These reinforcing cords can have crosswise orientation with respect to a direction of circumferential extension of the tyre 1. "Circumferential" direction means a direction generally turned in the direction of rotation of the tyre, or slightly inclined with respect to the direction of rotation of the tyre.

A tread band 7 of elastomeric compound, like other semifinished components of the tyre 1, is applied in the radially outer position to the belt structure 6.

On the lateral surfaces of the carcass structure 2, each extending from one of the lateral edges of the tread band 7 until flush with the respective annular structure for anchoring to the beads 5, furthermore, respective sidewalls 8 of elastomeric compound are applied in an axially outer position.

A radially internal surface of tyre 1 is moreover preferably coated internally with a layer of elastomeric material substantially impermeable to air or so-called liner 9.

The belt structure 6 further comprises at least one radially outer reinforcing layer 6c with respect to the belt layers 6a, 6b. The radially outer reinforcing layer 6c comprises textile or metallic cords, arranged at a substantially zero angle with respect to the direction of circumferential extension of the tyre and embedded in the elastomeric material. Preferably, the cords are arranged substantially parallel and side by side to form a plurality of turns. These turns are substantially orientated in the circumferential direction (typically with an angle between 0° and 5°), said direction usually being called "at zero degrees" with reference to its arrangement with respect to the equatorial plane X-X of the tyre. "Equatorial plane" of the tyre means a plane perpendicular to the rotation axis of the tyre and which divides the tyre into two symmetrically identical parts.

Preferably but not exclusively, the tyre 1 for motor vehicles is of the HP (High Performance) or UHP (Ultra High Performance) type, i.e. is a tyre capable of withstanding maximum speeds of at least 190km/h, up to more than 300km/h. Examples of said tyres are those belonging to classes "T", "U", "H", "V", "Z", "W", "Y".

The building of tyre 1 as described above is carried out by assembling respective semifinished articles on a building drum, not shown, by means of at least one assembly device.

At least a proportion of the components intended to form the carcass structure 2 of the tyre 1 is constructed and/or assembled on the building drum. In more detail, the building drum can receive firstly the optional liner 9, and then the carcass ply 3. Next, devices that are not shown engage coaxially, around each of the terminal edges, with one of the annular anchoring structures 4, position an outer sleeve comprising the belt structure 6 and the tread band 7 in position coaxially centred about the cylindrical carcass sleeve and shape the carcass sleeve in a toroidal configuration by radial expansion of the carcass ply 3, in order to cause application thereof against a radially internal surface of the outer sleeve.

Following building of the raw tyre 1, a finishing treatment of moulding and vulcanization is carried out for structural stabilization of the tyre 1 by crosslinking of the elastomeric compounds as well as impressing, on the tread band 7, a desired tread pattern and for impressing any distinctive graphical symbols on the sidewalls 8.

The present invention will be further illustrated below with a number of examples, which are supplied purely as a guide and without any limitation of the present invention.

### EXAMPLES

### EXAMPLE 1 - Physicochemical characteristics of the polymers

The random iso-styrene/trans-butadiene copolymers SBR1-6 were prepared using the homogeneous catalyst having general formula (I) described above.

The main characteristics of random iso-styrene/trans-butadiene polymers SBR1-6 are summarized and compared with those of two conventional SBR polymers with high styrene content (HP755 and T591) and of an SBR oil of low MW (Ricon 100), in the following Table 1.

**Table 1**

| Product | Styrene | | 1,4-butadiene | | 1,2-polybutadiene (wt. %) | onset Tg (°C) | MW | Index of dispersion |
|---|---|---|---|---|---|---|---|---|
| | wt.% | Configuration | wt.% | Conformation | | | | |
| SBR1 | 44 | Isotactic | 54 | Trans | 0 | -42.3 | 11700 | 3.3 |
| SBR2 | 50 | Isotactic | 50 | Trans | 0 | -34.39 | 40502 | 3.45 |
| SBR3 | 54.37 | Isotactic | 45.63 | Trans | 0 | -32 | 9197 | 1.76 |
| SBR4 | 62.3 | Isotactic | 37.7 | Trans | 0 | -24.8 | 12303 | 1.72 |
| SBR5 | 86 | Isotactic | 14 | Trans | 0 | 3.7 | 52800 | 2.5 |
| SBR6 | 89 | Isotactic | 11 | Trans | 0 | 18.59 | 103200 | 1.9 |
| Buna VSL 2438-2 HM | 38 | Random | 23 | Random | 39 | -34 | 670000 | 3.7 |
| Ricon 100* | 25 | Random | 22,5 | Random | 52.5 | -14 | 2079 | 1.35 |

| | | | | | | | | |
|---|---|---|---|---|---|---|---|---|
| (*) comparison - Buna VSL 2438-2 HM: solution of styrene-butadiene rubber in TDAE oil, comprising 38 wt.% of styrene, 24 wt.% of vinyl and 27 wt.% of oil, produced by Lanxess Deutschland GmbH, Germany - Ricon 100: random styrene-butadiene copolymer, liquid, of low MW (4500) and high vinyl content (1,2-butadiene monomers 70 mol.%) and styrene content 25 wt.%, produced by Cray Valley SA, France | | | | | | | | |

### Example 2

The elastomeric compositions 1-6 shown in the following Table 2 were prepared using a styrene-indene resin (Novares TT90), an oil (Ricon 100), and the polymers SBR1-4 having the characteristics described above. In particular, the polymers SBR1-4 comprise a percentage of styrene between 40 and 70 wt.% with respect to the total weight of the copolymer.

All the components, except sulphur and accelerant, were mixed together in an internal mixer (model Pomini PL 1.6) for about 5 minutes (1st phase). As soon as the temperature reached 145+5°C, the elastomeric composition was discharged. The sulphur and accelerant were then added and mixing was carried out in an open roll mixer (2nd phase).

**Table 2**

| | Compounds | | | | | |
|---|---|---|---|---|---|---|
| | 1* | 2* | 3 | 4 | 5 | 6 |
| Buna VSL 2438-2 HM | 100 | 100 | 100 | 100 | 100 | 100 |
| Novares TT90 | 10.00 | - | - | - | - | - |
| Ricon 100 | - | 10.00 | - | - | - | - |
| SBR 4 | - | - | 10.00 | - | - | - |
| SBR 1 | - | - | - | 10.00 | - | - |
| SBR 3 | - | - | - | - | - | 10.00 |
| SBR 2 | - | - | - | - | 10.00 | - |
| Stearic acid | 2.00 | 2.00 | 2.00 | 2.00 | 2.00 | 2.00 |
| ZnO | 3.13 | 3.13 | 3.13 | 3.13 | 3.13 | 3.13 |
| Wax | 1.00 | 1.00 | 1.00 | 1.00 | 1.00 | 1.00 |
| Corax HP 160 | 65.00 | 65.00 | 65.00 | 65.00 | 65.00 | 65.00 |
| Vivatec 500 | 5.00 | 5.00 | 5.00 | 5.00 | 5.00 | 5.00 |
| 6PPD | 2.5 | 2.5 | 2.5 | 2.5 | 2.5 | 2.5 |
| CBS | 1.5 | 1.5 | 1.5 | 1.5 | 1.5 | 1.5 |
| Sulphur | 0.3 | 0.3 | 0.3 | 0.3 | 0.3 | 0. 3 |

| | | | | | | |
|---|---|---|---|---|---|---|
| (*) comparison All amounts are expressed in phr. - Buna VSL 2438-2 HM: solution of styrene-butadiene rubber in TDAE oil, comprising 38 wt.% of styrene, 24 wt.% of vinyl and 27 wt.% of oil, produced by Lanxess Deutschland GmbH, Germany - Novares TT90: Hydrocarbon resin produced by Reutgers Germany GmbH, Germany - Ricon 100: random styrene-butadiene copolymer, liquid, with low MW (4500) and high vinyl content (1,2-butadiene monomers 70 mol.%) and styrene content 25 wt.%, produced by Cray Valley SA, France - Corax HP160: carbon black with high specific surface produced by Evonik Degussa GmbH, Germany - Vivatec^{®} 500 (plasticizer): TDAE oil (Treated Distillate Aromatic Extract), produced by Hansen & Rosenthal, Germany - 6PPD (antioxidant): N-(1,3-dimethylbutyl)-N'-phenyl-p-phenylenediamine - CBS (accelerant): N-cyclohexyl-2-benzothiazylsulphenamide, produced by Lanxess Deutschland GmbH, Germany | | | | | | |

The characteristics of each elastomeric composition 1-6 were evaluated as described below and the results are summarized in the following Table 3.

The elastic modulus and breaking load were measured according to standard ISO 37:2005, on samples of the elastomeric compositions described below, crosslinked at 170°C for 10 minutes.

The hardness in degrees IRHD was measured according to standard ISO 48:2007 on samples of elastomeric compositions vulcanized at 170°C for 10 minutes.

The dynamic mechanical properties were measured with an Instron dynamic tester in tension-compression by the following methods. A sample of the elastomeric composition (crosslinked at 170°C for 10 min) of cylindrical shape (length = 25 mm; diameter = 12 mm), preloaded by compression to 25% of longitudinal deformation with respect to the initial length, and maintained at the specified temperature (100°C) throughout the test, was submitted to dynamic sinusoidal stretching having an amplitude of ±3.5% relative to the length in pre-load conditions, with a frequency of 100 Hz. The dynamic mechanical properties are expressed in terms of dynamic elastic modulus (E') and values of the loss factor (tan δ). The value of tan δ is calculated as the ratio of the viscous modulus (E") to the elastic modulus (E').

For the purpose of comparing the results, the values of the parameters were expressed as percentages, the test values measured for sample 1 were put as reference at 100 and the test values relating to samples 2, 3, 4, 5 and 6 were referred to the test values measured for sample 1.

**Table 3**

| | Elastomeric composition | | | | | |
|---|---|---|---|---|---|---|
| | 1* | 2* | 3 | 4 | 5 | 6 |
| Ca3[MPa] | 100 | 75 | 100 | 99 | 104 | 101 |
| IRHD 10°C | 100 | 95 | 97 | 94 | 95 | 92 |
| IRHD 23°C | 100 | 94 | 98 | 97 | 96 | 93 |
| IRHD 70°C | 100 | 94 | 104 | 102 | 105 | 102 |
| IRHD 100°C | 100 | 94 | 103 | 103 | 104 | 104 |
| Delta IRHD 10-100 | 100 | 95 | 91 | 84 | 83 | 79 |
| E'[MPa] 70°C 10Hz | 100 | 87 | 109 | 106 | 110 | 113 |
| Tan δ | 100 | 95 | 94 | 93 | 92 | 95 |
| E'[MPa] 70°C 100Hz | 100 | 87 | 108 | 105 | 108 | 110 |
| Tan δ | 100 | 94 | 91 | 93 | 89 | 91 |
| E'[MPa] 100°C 10Hz | 100 | 88 | 108 | 107 | 111 | 114 |
| Tan δ | 100 | 98 | 98 | 97 | 97 | 101 |
| E'[MPa] 100°C 100Hz | 100 | 88 | 108 | 108 | 110 | 114 |
| Tan δ | 100 | 97 | 99 | 96 | 94 | 98 |
| Tg[°C] | -5.3 | -9.3 | -8.2 | -9.9 | -9.3 | -9.3 |

| | | | | | | |
|---|---|---|---|---|---|---|
| (*) comparison | | | | | | |

The results obtained showed that:
- the value of Ca3 (load at 300% elongation) is greater for compounds 3-6 of the invention relative to the comparison compounds;
- the value of delta 10-100 is lower for compounds 3-6 of the invention relative to the comparison compounds;
- the value of modulus E' measured at 100°C is higher than the value obtained for the comparison compounds and, at the same time, the values of tan delta (hysteresis) at 100°C are similar to those obtained for the hydrocarbon resin Novares^{®} TT90.

The results obtained show that a tyre tread according to the present invention comprising any one of the elastomeric compositions 3-6 displayed greater resistance to overheating and better performance in harsh service, as well as lower compliance and better resistance to tearing (higher values of IRHD at 70°C and 100°C and lower values of Delta IRHD 10-100).

### Example 3

The elastomeric compositions 7-10 presented in the following Table 4 were prepared using the polymers SBR5 and SBR6 having the characteristics described above and a hydrocarbon resin (Novares TT 90) as comparison. In particular, the polymers SBR5 and SBR6 comprise a percentage of styrene between 70 and 90 wt.% with respect to the total weight of the copolymer.

All the components, except sulphur and accelerant, were mixed together in an internal mixer (model Pomini PL 1.6) for about 5 minutes (1st phase). As soon as the temperature reached 145+5°C, the elastomeric composition was discharged. The sulphur and accelerant were then added and mixing was carried out in an open roll mixer (2nd phase).

**Table 4**

| | Compounds | | |
|---|---|---|---|
| | 7* | 8 | 9 |
| Buna VSL 2438-2 HM | 100 | 100 | 100 |
| Novares TT 90 | 10.00 | - | - |
| SBR5 | - | 10.00 | - |
| SBR6 | - | - | 10.00 |
| Stearic acid | 2.00 | 2.00 | 2.00 |
| ZnO | 3.13 | 3.13 | 3.13 |
| Wax | 1.00 | 1.00 | 1.00 |
| Corax HP 160 | 65.00 | 65.00 | 65.00 |
| Vivatec 500 | 5.00 | 5.00 | 5.00 |
| 6PPD | 2.5 | 2.5 | 2.5 |
| CBS | 1.8 | 1.8 | 1.8 |
| Sulphur | 1.4 | 1.4 | 1.4 |

| | | | |
|---|---|---|---|
| (*) comparison All amounts are to be expressed in phr. - Buna VSL 2438-2 HM: solution of styrene-butadiene rubber in TDAE oil, comprising 38 wt.% of styrene, 24 wt.% of vinyl and 27 wt.% of oil, produced by Lanxess Deutschland GmbH, Germany - Novares TT90: hydrocarbon resin produced by Reutgers Germany GmbH, Germany - Ricon 100: random styrene-butadiene copolymer, liquid, with low MW (4500) and high vinyl content (1,2-butadiene monomers 70 mol.%) and styrene content 25 wt.%, produced by Cray Valley SA, France - Corax HP160: carbon black with high specific surface produced by Evonik Degussa GmbH, Germany - Vivatec^{®} 500 (plasticizer): TDAE oil (Treated Distillate Aromatic Extract), produced by Hansen & Rosenthal, Germany - 6PPD (antioxidant): N-(1,3-dimethylbutyl)-N'-phenyl-p-phenylenediamine - CBS (accelerant): N-cyclohexyl-2-benzothiazylsulphenamide, produced by Lanxess Deutschland GmbH, Germany | | | |

The characteristics of each elastomeric composition 7-9 were evaluated as described in example 2 and the results are summarized in the following Table 5.

For the purpose of comparing the results, the values of the parameters are expressed as percentages, the test values measured for sample 7 were put as reference at 100 and the test values relating to samples 8 and 9 were referred to the test values measured for sample 7.

**Table 5**

| | Compounds | | |
|---|---|---|---|
| | 7* | 8 | 9 |
| Ca3[MPa] | 100 | 141 | 136 |
| IRHD 23°C | 100 | 125 | 124 |
| IRHD 100°C | 100 | 171 | 167 |
| Delta IRHD 23-100 | 100 | 95 | 91 |
| E'[MPa] 70°C 10Hz | 100 | 124 | 126 |
| Tan δ | 100 | 122 | 114 |
| E'[MPa] 100°C 10Hz | 100 | 109 | 116 |
| Tan δ | 100 | 104 | 104 |
| E'[MPa] 100°C 100Hz | 100 | 107 | 120 |
| Tan δ | 100 | 122 | 122 |

| | | | |
|---|---|---|---|
| (*) comparison | | | |

The results obtained showed that:
- the value of Ca3 (load at 300% elongation) is improved when the polymers of the invention are used;
- the value of delta IRHD 23-100 is lower when the compounds of the invention are used;
- the value of the modulus E', measured both at 70°C and at 100°C, is decisively higher with respect to the comparison compounds and, at the same time, the values of tan delta (hysteresis) are decisively higher with respect to the comparison compound.

The results obtained demonstrated that a tyre tread according to the present invention comprising either of the elastomeric compositions 8-9 displayed greater grip even in extremely harsh driving conditions, for example when used on a racing track at high speeds and on curves.

## Claims

1. A tyre for vehicle wheels comprising:
- a carcass structure, having opposite lateral edges associated with respective bead structures;
- a belt structure applied in a radially outer position with respect to said carcass structure;
- a tread band applied in radially outer position with respect to said belt structure;
**characterized in that** said tread band comprises a crosslinked elastomeric material obtained by crosslinking a crosslinkable elastomeric composition, wherein said elastomeric composition comprises at least a random iso-styrene/trans-butadiene copolymer having a styrene content higher than 40% by weight with respect to the total weight of the copolymer.

2. Tyre for vehicle wheels according to claim 1, wherein said styrene-butadiene copolymer has a styrene content between 40% and 90% by weight with respect to the total weight of the copolymer.

3. Tyre for vehicle wheels according to claim 1, wherein said styrene-butadiene copolymer has a 1,4-butadiene content between 10% and 60% by weight with respect to the total weight of the copolymer.

4. Tyre for vehicle wheels according to claim 1, wherein said styrene-butadiene copolymer has a 1,2-butadiene content lower than 2% by weight with respect to the total weight of the copolymer.

5. Tyre for vehicle wheels according to claim 1, wherein said styrene-butadiene copolymer has a Tg value, measured at the onset - onset Tg, between -45° and +20°C.

6. Tyre for vehicle wheels according to claim 1, wherein said styrene-butadiene copolymer has a molecular weight lower than 500,000, preferably lower than 200,000 and, even more preferably between 10,000 and 150,000.

7. Tyre for vehicle wheels according to claim 1, wherein said styrene-butadiene copolymer has a index of dispersion ID of the molecular weight between 1 and 5.

8. Tyre for vehicle wheels according to claim 1, wherein said styrene-butadiene copolymer is present in the elastomeric composition in an amount between 1 and 30 phr, preferably between 5 and 20 phr, and even more preferably between 7 and 15 phr.

9. Tyre for vehicle wheels according to claim 1, wherein said styrene-butadiene copolymer is obtained by solution polymerization of styrene and butadiene using a homogeneous catalyst having general formula (I) 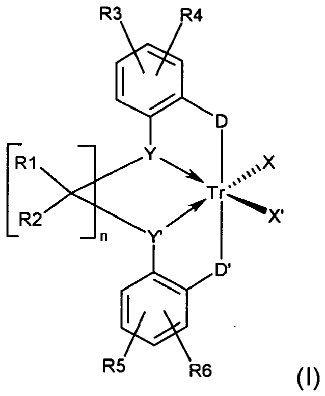
wherein Tr is a transition metal,
X and X', which are equal or different, are a halogen atom,
R1 and R2, which are the same or different, are a H atom or a linear or branched alkyl group having from 1 to 10 carbon atoms, from R3 to R6, which are the same or different, are a H atom or a linear or branched alkyl group having from 1 to 10 carbon atoms,
Y and Y', which are the same or different, are an oxygen, sulphur, selenium or tellurium atom, or a NR7 or PR7 group,
D and D', which are the same or different, are an oxygen, sulphur, selenium or tellurium atom, or a NR7 or PR7 group,
R7 is a H atom or a linear or branched alkyl group having from 1 to 10 carbon atoms,
n is an integer from 1 to 10.

10. Tyre for vehicle wheels according to claim 1, wherein said crosslinkable elastomeric composition comprises at least a natural or synthetic diene elastomeric polymer having high molecular weight.

11. Tyre for vehicle wheels according to claim 10, wherein said diene elastomeric polymer is selected from the group comprising cis-1,4-polyisoprene (natural or synthetic, preferably natural rubber), 3,4-polyisoprene, polybutadiene (in particular, polybutadiene having a high 1,4-cis content), isoprene/isobutene copolymers optionally halogenated, 1,3-butadiene/acrylonitrile copolymers, styrene/1,3-butadiene copolymers, styrene/isoprene/1,3-butadiene copolymers, styrene/1,3-butadiene/acrylonitrile copolymers, or mixtures thereof.

12. Tyre for vehicle wheels according to claim 1, wherein said crosslinkable elastomeric composition comprises at least one reinforcing filler selected from the group comprising carbon black, silica and silicates, alumina calcium carbonate, or mixtures thereof.

13. Tyre for vehicle wheels according to claim 1, wherein said crosslinkable elastomeric composition comprises a sulphur-based curing agent.

14. Tyre for vehicle wheels according to claim 1, wherein said crosslinkable elastomeric composition comprises a curing activator selected from the group comprising oxides and salts of Zn, Fe, Cu, Sn, Mo and Ni.

15. Tyre for vehicle wheels according to claim 1, wherein said crosslinkable elastomeric composition comprises a curing retardant selected from the group comprising urea, N-cyclohexyl-2-benzothiazolyl sulphenamide, N-cyclohexyl-phtalimide, N-cyclohexyl-thiophtalimide, N-nitroso-diphenylamina or mixtures thereof.

## Patentansprüche

1. Reifen für Fahrzeugräder, der umfasst:
- eine Karkassenstruktur mit gegenüberliegenden Seitenrändern, die jeweiligen Wulststrukturen zugeordnet sind;
- eine Gürtelstruktur, die in Bezug auf die Karkassenstruktur in einer radial äußeren Position angelegt ist;
- ein Laufflächenband, das in Bezug auf die Gürtelstruktur in einer radial äußeren Position angelegt ist;
**dadurch gekennzeichnet, dass** das Laufflächenband ein vernetztes elastomeres Material umfasst, das durch Vernetzen einer vernetzbaren elastomeren Zusammensetzung erhalten wird, wobei die elastomere Zusammensetzung zumindest ein statistisches Isostyrol-/Trans-Butadien-Copolymer mit einem Styrolgehalt von mehr als 40 Gew.-% bezogen auf das Gesamtgewicht des Copolymers umfasst.

2. Reifen für Fahrzeugräder nach Anspruch 1, wobei das Styrol-Butadien-Copolymer einen Styrol-Gehalt zwischen 40 Gew.-% und 90 Gew.-% bezogen auf das Gesamtgewicht des Copolymers aufweist.

3. Reifen für Fahrzeugräder nach Anspruch 1, wobei das Styrol-Butadien-Copolymer einen 1,4-Butadien-Gehalt zwischen 10 Gew.-% und 60 Gew.-% bezogen auf das Gesamtgewicht des Copolymers aufweist.

4. Reifen für Fahrzeugräder nach Anspruch 1, wobei das Styrol-Butadien-Copolymer einen 1,2-Butadien-Gehalt von weniger als 2 Gew.-% bezogen auf das Gesamtgewicht des Copolymers aufweist.

5. Reifen für Fahrzeugräder nach Anspruch 1, wobei das Styrol-Butadien-Copolymer einen Tg-Wert, gemessen am Einsatzpunkt als Einsatzpunkt-Tg, zwischen -45 °C und +20 °C aufweist.

6. Reifen für Fahrzeugräder nach Anspruch 1, wobei das Styrol-Butadien-Copolymer ein Molekulargewicht von unter 500.000, vorzugsweise unter 200.000 und noch bevorzugter zwischen 10.000 und 150.000 aufweist.

7. Reifen für Fahrzeugräder nach Anspruch 1, wobei das Styrol-Butadien-Copolymer einen Dispersionsindex ID des Molekulargewichts zwischen 1 und 5 aufweist.

8. Reifen für Fahrzeugräder nach Anspruch 1, wobei das Styrol-Butadien-Copolymer in der elastomeren Zusammensetzung in einer Menge zwischen 1 und 30 phr, vorzugsweise zwischen 5 und 20 phr, und noch bevorzugter zwischen 7 und 15 phr vorliegt.

9. Reifen für Fahrzeugräder nach Anspruch 1, wobei das Styrol-Butadien-Copolymer durch Lösungspolymerisation von Styrol und Butadien unter Verwendung eines homogenen Katalysators mit der allgemeinen Formel (I) 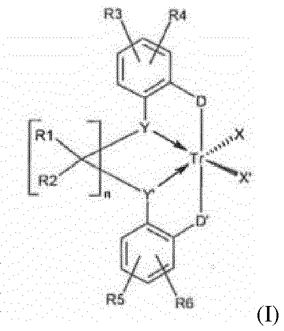 erhalten wird, wobei Tr ein Übergangsmetall ist,
X und X', die gleich oder verschieden sind, ein Halogenatom darstellen,
R1 und R2, die gleich oder verschieden sind, ein H-Atom oder eine lineare oder verzweigte Alkylgruppe mit 1 bis 10 Kohlenstoffatomen darstellen,
von R3 bis R6, die gleich oder verschieden sind, ein H-Atom oder eine lineare oder verzweigte Alkylgruppe mit 1 bis 10 Kohlenstoffatomen darstellen, Y und Y', die gleich oder verschieden sind, ein Sauerstoff-, Schwefel-, Selen- oder Telluratom, oder eine NR7- oder PR7-Gruppe darstellen,
D und D', die gleich oder verschieden sind, ein Sauerstoff-, Schwefel-, Selen- oder Telluratom, oder eine NR7- oder PR7-Gruppe darstellen,
R7 ein H-Atom oder eine lineare oder verzweigte Alkylgruppe mit 1 bis 10 Kohlenstoffatomen darstellt,
n eine ganze Zahl von 1 bis 10 ist.

10. Reifen für Fahrzeugräder nach Anspruch 1, wobei die vernetzbare elastomere Zusammensetzung zumindest ein natürliches oder synthetisches elastomeres Polymer mit einem hohen Molekulargewicht umfasst.

11. Reifen für Fahrzeugräder nach Anspruch 10, wobei das elastomere Dienpolymer ausgewählt ist aus der Gruppe, die cis-1,4-Polyisopren (natürlicher oder synthetischer, vorzugsweise natürlicher Kautschuk), 3,4-Polyisopren, Polybutadien (insbesondere Polybutadien mit einem hohen 1,4-cis-Gehalt), optional halogenierte Isopren-/Isobuten-Copolymere, 1,3-Butadien-/Acrylnitril-Copolymere, Styrol-/1,3-Butadien-Copolymere, Styrol-/Isopren-/1,3-Butadien-Copolymere, Styrol-/1,3-Butadien-/Acrylnitril-Copolymere, oder Mischungen davon umfasst.

12. Reifen für Fahrzeugräder nach Anspruch 1, wobei die vernetzbare elastomere Zusammensetzung zumindest einen verstärkenden Füllstoff umfasst, der ausgewählt ist aus der Gruppe, die Kohlenstoffruss, Siliziumdioxid und Silikate, Aluminiumoxid, Calciumcarbonat oder Mischungen davon umfasst.

13. Reifen für Fahrzeugräder nach Anspruch 1, wobei die vernetzbare elastomere Zusammensetzung ein auf Schwefel basierendes Vulkanisiermittel umfasst.

14. Reifen für Fahrzeugräder nach Anspruch 1, wobei die vernetzbare elastomere Zusammensetzung einen Vulkanisationsaktivator umfasst, der aus der Gruppe ausgewählt ist, die Oxide und Salze von Zn, Fe, Cu, Sn, Mo und Ni umfasst.

15. Reifen für Fahrzeugräder nach Anspruch 1, wobei die vernetzbare elastomere Zusammensetzung einen Vulkanisationshemmer umfasst, der ausgewählt ist aus der Gruppe, die Harnstoff, N-cyclohexyl-2-benzothiazolylsulfenamid, N-cyclohexyl-phtalimid, N-cyclohexyl-thiophtalimid, N-nitroso-diphenylamin oder Mischungen davon umfasst.

## Revendications

1. Pneu pour roues de véhicule comprenant :
- une structure de carcasse, ayant des bords latéraux opposés associés à des structures de bourrelet respectives ;
- une structure de ceinture appliquée dans une position radialement extérieure par rapport à ladite structure de carcasse ;
- une bande de roulement appliquée dans une position radialement extérieure par rapport à ladite structure de ceinture ;
**caractérisé en ce que** ladite bande de roulement comprend un matériau élastomère réticulé obtenu par réticulation d'une composition élastomère réticulable, dans lequel ladite composition élastomère comprend au moins un copolymère iso-styrène/trans-butadiène ayant une teneur en styrène supérieure à 40% en poids par rapport au poids total du copolymère.

2. Pneu pour roues de véhicule selon la revendication 1, dans lequel ledit copolymère styrène-butadiène a une teneur en styrène comprise entre 40% et 90% en poids par rapport au poids total du copolymère.

3. Pneu pour roues de véhicule selon la revendication 1, dans lequel ledit copolymère styrène-butadiène a une teneur en 1,4-butadiène comprise entre 10% et 60% en poids par rapport au poids total du copolymère.

4. Pneu pour roues de véhicule selon la revendication 1, dans lequel ledit copolymère styrène-butadiène a une teneur en 1,2-butadiène inférieure à 2% en poids par rapport au poids total du copolymère.

5. Pneu pour roues de véhicule selon la revendication 1, dans lequel ledit copolymère styrène-butadiène a une valeur Tg, mesurée au départ - Tg de départ comprise entre -45° et +20°C.

6. Pneu pour roues de véhicule selon la revendication 1, dans lequel ledit copolymère styrène-butadiène a un poids moléculaire inférieur à 500000, préférablement inférieur à 200000 et, encore plus préférablement compris entre 10000 et 150000.

7. Pneu pour roues de véhicule selon la revendication 1, dans lequel ledit copolymère styrène-butadiène a un indice de dispersion ID du poids moléculaire compris entre 1 et 5.

8. Pneu pour roues de véhicule selon la revendication 1, dans lequel ledit copolymère styrène-butadiène est présent dans la composition élastomère en une quantité comprise entre 1 et 30 phr, préférablement entre 5 et 20 phr, et encore plus préférablement entre 7 et 15 phr.

9. Pneu pour roues de véhicule selon la revendication 1, dans lequel ledit copolymère styrène-butadiène est obtenu par polymérisation en solution du styrène et du butadiène en utilisant un catalyseur homogène ayant la formule générale (I) 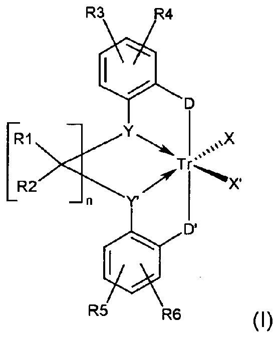
dans laquelle Tr est un métal de transition,
X et X', qui sont égaux ou différents, représentent un atome d'halogène,
R1 et R2, qui sont identiques ou différents, représentent un atome de H ou un groupe alkyle linéaire ou ramifié ayant de 1 à 10 atomes de carbone,
R3 à R6, qui sont identiques ou différents, représentent un atome de H ou un groupe alkyle linéaire ou un ramifié ayant de 1 à 10 atomes de carbone,
Y et Y', qui sont identiques ou différents, représentent un atome d'oxygène, de soufre, de sélénium ou de tellure, ou un groupe NR7 ou PR7,
D et D', qui sont identiques ou différents, représentent un atome d'oxygène, de soufre, de sélénium ou de tellure, ou un groupe NR7 ou PR7,
R7 est un atome de H ou un groupe alkyle linéaire ou ramifié ayant de 1 à 10 atomes de carbone,
n est un nombre entier allant de 1 à 10.

10. Pneu pour roues de véhicule selon la revendication 1, dans lequel ladite composition élastomère réticulable comprend au moins un polymère élastomère de diène naturel ou synthétique ayant un poids moléculaire élevé.

11. Pneu pour roues de véhicule selon la revendication 10, dans lequel ledit polymère élastomère de diène est choisi dans le groupe comprenant le cis-1,4-polyisoprène (naturel ou synthétique, préférablement du caoutchouc naturel), le 3,4-polyisoprène, le polybutadiène (en particulier, le polybutadiène ayant une teneur élevée en 1,4-cis), des copolymères isoprène/isobutène éventuellement halogénés, des copolymères 1,3-butadiène/acrylonitrile, des copolymères styrène/1,3-butadiène, des copolymères styrène/isoprène/1,3-butadiène, des copolymères styrène/1,3-butadiène/acrylonitrile, ou des mélanges de ceux-ci.

12. Pneu pour roues de véhicule selon la revendication 1, dans lequel ladite composition élastomère réticulable comprend au moins une charge renforçante choisie dans le groupe comprenant du noir de carbone, de la silice et des silicates, de l'alumine, du carbonate de calcium, ou des mélanges de ceux-ci.

13. Pneu pour roues de véhicule selon la revendication 1, dans lequel ladite composition élastomère réticulable comprend un agent de vulcanisation à base de soufre.

14. Pneu pour roues de véhicule selon la revendication 1, dans lequel ladite composition élastomère réticulable comprend un activateur de vulcanisation choisi dans le groupe comprenant des oxydes et des sels de Zn, de Fe, de Cu, de Sn, de Mo et de Ni.

15. Pneu pour roues de véhicule selon la revendication 1, dans lequel ladite composition élastomère réticulable comprend un retardateur de vulcanisation choisi dans le groupe comprenant l'urée, la N-cyclohexyl-2-benzothiazolyl sulfénamide, le N-cyclohexyl-phtalimide, le N-cyclohexyl-thiophtalimide, la N-nitroso-diphénylamine ou des mélanges de ceux-ci.
